# EUROPÄISCHE PATENTANMELDUNG

(11) **EP 0 952 057 A2**
(43) Veröffentlichungstag der Anmeldung: **27.10.1999**
(21) Anmeldenummer: 99107616.7
(22) Anmeldetag: 16.04.1999
(51) Int. Cl.: B60S 1/48, B60S 1/60, B60Q 1/26

(54) **Leuchte, insbesondere Heckleuchte, für Kraftfahrzeuge**

(30) Priorität: 25.04.1998 DE 19818643
(71) Anmelder: REITTER & SCHEFENACKER GmbH & Co. KG, D-73730 Esslingen (DE)
(72) Erfinder: Gauch, Winfried Hardy, 71106 Magstadt (DE); Robel, Wolfgang, 70794 Filderstadt-Sielmingen (DE)
(74) Vertreter: Kohl, Karl-Heinz

(57) **Zusammenfassung**

Die Leuchte hat eine Lichtscheibe (3), hinter der ein Leuchtmittel (1) angeordnet ist. Bei Verschmutzung der Lichtscheibe (3) sinkt die Lichtleistung, so daß die Leuchte nicht mehr von nachfolgenden Fahrzeugen erkennbar ist. Um zumindest starke Verschmutzungen der Lichtscheibe (3) einwandfrei und vollständig erfassen zu können, sind an ihr ein Emitter (5) und ein Empfänger (8) vorgesehen, der ein vom Emitter (5) ausgesandtes Lichtsignal (4) erfaßt, das durch die Lichtscheibe (3) vom Emitter (5) durch Totalreflexion zum Empfänger (8) gelangt. Der Empfänger (8) erkennt an der empfangenen Lichtmenge den Grad der Verschmutzung der Lichtscheibe (3). Bei einem vorbestimmten Verschmutzungsgrad kann beispielsweise über eine automatische Reinigungseinrichtung die Lichtscheibe (3) gereinigt werden. Bei der Leuchte läßt sich der Verschmutzungsgrad der Lichtscheibe (3) zuverlässig ermitteln, so daß die Gefahr durch Unfälle infolge einer schlecht sichtbaren Leuchte verhindert werden kann.

## Beschreibung

Die Erfindung betrifft eine Leuchte nach dem Oberbegriff des Anspruches 1.

Bei bekannten Heckleuchten dieser Art hat deren Verschmutzungsgrad direkten Einfluß auf die Leuchtfunktion. Bei Verschmutzung der Lichtscheibe durch Staub, Regen und dgl. sinkt die Lichtleistung der Leuchte; sie kann sogar so gering sein, daß die Leuchte nicht mehr von nachfolgenden Fahrzeugen erkennbar ist. Da von der Leuchtfunktion dieser Leuchten die Sicherheit der Kraftfahrzeuginsassen abhängt, ist es lebenswichtig, daß die Leuchte gut sichtbar bzw. das von ihr ausgesandte Licht in voller Intensität ausgesandt werden kann.

Der Erfindung liegt die Aufgabe zugrunde, eine Leuchte dieser Art so auszubilden, daß zumindest starke Verschmutzungen der Lichtscheibe einwandfrei und vollständig erfaßt werden können.

Diese Aufgabe wird bei einer Leuchte der gattungsbildenden Art erfindungsgemäß mit den kennzeichnenden Merkmalen des Anspruches 1 gelöst.

Infolge der erfindungsgemäßen Ausbildung erkennt der Empfänger an der empfangenen Lichtmenge den Grad der Verschmutzung der Lichtscheibe. Der Verschmutzungsgrad der Lichtscheibe hat somit direkten Einfluß auf den effektiven Lichtstrom der Leuchtenfunktion. Ab einem bestimmten Verschmutzungsgrad kann beispielsweise über eine automatische Reinigungseinrichtung die Lichtscheibe gereinigt oder durch eine Signaleinrichtung der Fahrer auf die Gefahr aufmerksam gemacht werden und dann eine Reinigungseinrichtung betätigen.

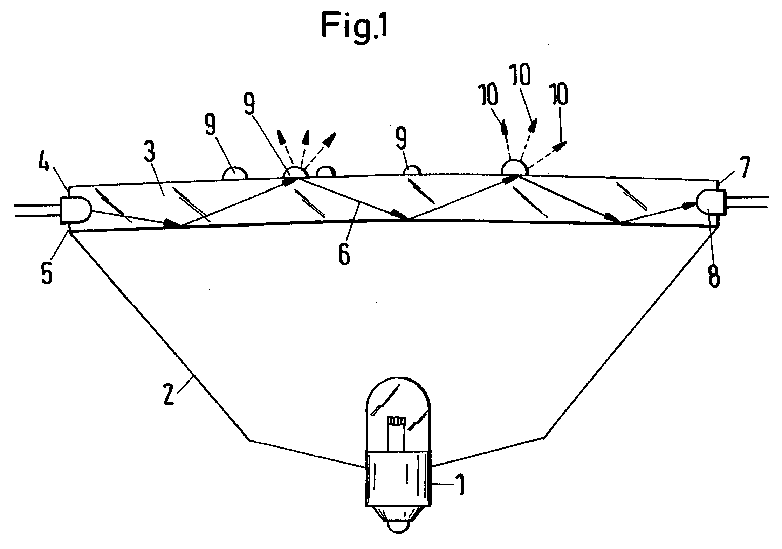

Weitere Merkmale der Erfindung ergeben sich aus den weiteren Ansprüchen, der Beschreibung und der Zeichnung.

Die Erfindung wird nachstehend anhand eines in der Zeichnung dargestellten Ausführungsbeispieles näher beschrieben. Die Zeichnung zeigt in schematischer Darstellung und im Axialschnitt eine erfindungsgemäße Heckleuchte.

Die in der Zeichnung dargestellte Heckleuchte weist ein Leuchtmittel 1 auf, das durch eine Glühlampe gebildet ist. Anstelle der einen Glühlampe können auch mehrere Glühlampen oder LED's oder sonstige andere Lichtquellen vorgesehen sein. Das Leuchtmittel 1 ist von einem Reflektor 2 umgeben, auf dessen Vorderseite eine Lichtscheibe 3 angeordnet ist. An einem Rand 4 der Lichtscheibe 3 ist ein Emitter 5 angeordnet. Er ist vorzugsweise durch mindestens eine Leuchtdiode im sichtbaren oder infraroten Bereich gebildet.

Das vom Emitter 5 ausgesandte Licht durchdringt die Lichtscheibe 3 und wird an ihrer Außenseite durch Totalreflexion an dieser reflektiert (Strahlen 6). Am gegenüberliegenden Rand 7 der Lichtscheibe 3 trifft der Lichtstrahl 6 auf einen dort vorgesehenen Empfänger 8. Er ist vorteilhaft durch mindestens eine Fotodiode oder mindestens einen Fototransistor gebildet. Der Empfänger 8 ist vorteilhaft an eine (nicht dargestellte) Reinigungseinrichtung für die Lichtscheibe 3 angeschlossen.

Befinden sich auf der Lichtscheibe 3 Verunreinigungen 9, wie beispielsweise Wassertropfen, Staubpartikel oder dgl., verändert sich an diesen Stellen der Totalreflexionswinkel der Lichtscheibe 3. Ein Teil der Strahlen 6 wird an den Verunreinigungen 9 nicht mehr reflektiert, sondern gebrochen (Strahlen 10) und somit aus der Lichtscheibe 3 ausgekoppelt. Auf den Empfänger 8 trifft daher nur ein Teil der vom Emitter 2 ausgesandten Lichtstrahlen 4. Die Größe des Ausgangssignals des Empfängers 8 gibt darum indirekt Aufschluß über den Verschmutzungsgrad der Lichtscheibe 3.

Zur Auswertung der Stärke des empfangenen Lichtstrahles 4 am Empfänger 8 wird vorteilhaft eine Kalibrierung mit einer sauberen Lichtscheibe 3 vorgenommen. Der ermittelte Wert dient dann als Referenzwert. Die Sender-/Empfängerstrecke in der Lichtscheibe 3 wird vorteilhaft gepulst betrieben, um Verfälschungen des Meßwertes durch Fremdlicht oder das Leuchtmittel 1 auszuschließen. Der Zusammenhang zwischen Verschmutzung der Lichtscheibe 3 mit unterschiedlichen Verunreinigungsarten 9 in unterschiedlichen Stärken und der daraus resultierende Transmission der Lichtscheibe 3 wird vorteilhaft empirisch ermittelt.

Die vom Empfänger 8 an die Reinigungseinrichtung gesandten Ausgangssignale, deren Höhe ein Maß für den Verschmutzungsgrad der Lichtscheibe 3 ist, werden ständig mit dem Referenzwert verglichen. Wird ein vorgegebener Differenzwert überschritten, ist dies ein Hinweis darauf, daß die Lichtscheibe 3 zu stark verschmutzt ist. Der Emitter 8 sendet in diesem Fall ein Signal an die Reinigungsvorrichtung, wodurch diese in Gang gesetzt wird.

Der Empfänger 8 kann auch mit einer (nicht dargestellten) Signaleinrichtung verbunden sein, die den Fahrer des Fahrzeuges auf den bedrohlichen Zustand der Leuchte bzw. seiner Lichtscheibe 3 aufmerksam macht. Der Fahrer kann dann selbst eine Reinigungseinrichtung für die Leuchte in Gang setzen.

Bei der beschriebenen Leuchte wird durch die beschriebene Emitter- und Empfangseinheit 5, 8 die gesamte Lichtscheibenfläche oder zumindest ein repräsentativer Teil der Lichtscheibe 3 zur Ermittlung der Verunreinigungen 9 verwendet. Dadurch läßt sich der Verschmutzungsgrad der Lichtscheibe 3 zuverlässig ermitteln, so daß die Gefahr durch Unfälle infolge einer schlecht sichtbaren Leuchte einwandfrei verhindert werden können.

## Patentansprüche

1. Leuchte, vorzugsweise Heckleuchte, für Kraftfahrzeuge, mit einer Lichtscheibe, hinter der mindestens ein Leuchtmittel angeordnet ist,
dadurch gekennzeichnet, daß zur Erfassung des Verschmutzungsgrades der Lichtscheibe (3) an ihr mindestens ein Emitter (5) und mindestens ein Empfänger (8) vorgesehen sind, der ein vom Emitter (5) ausgesandtes Lichtsignal (4) erfaßt, das durch die Lichtscheibe (3) vom Emitter (5) durch Totalreflexion zum Empfänger (8) gelangt.

2. Leuchte nach Anspruch 1,
dadurch gekennzeichnet, daß der Emitter (5) Lichtstrahlen (6) im sichtbaren oder infraroten Bereich aussendet.

3. Leuchte nach Anspruch 1 oder 2,
dadurch gekennzeichnet, daß der Emitter (5) eine Leuchtdiode ist.

4. Leuchte nach einem der Ansprüche 1 bis 3,
dadurch gekennzeichnet, daß der Empfänger (8) durch eine Leuchtdiode oder einen Fototransistor gebildet ist.

5. Leuchte nach einem der Ansprüche 1 bis 4,
dadurch gekennzeichnet, daß der Emitter (5) und der Empfänger (8) an einander gegenüberliegenden Seitenrändern (4, 7) der Lichtscheibe (3) vorgesehen sind.

6. Leuchte nach einem der Ansprüche 1 bis 5,
dadurch gekennzeichnet, daß an den Empfänger (8) eine Reinigungsvorrichtung für die Lichtscheibe (3) angeschlossen ist.

7. Leuchte nach einem der Ansprüche 1 bis 6,
dadurch gekennzeichnet, daß an den Empfänger (8) eine Signaleinrichtung angeschlossen ist.

8. Leuchte nach einem der Ansprüche 1 bis 8,
dadurch gekennzeichnet, daß das Ausgangssignal des Empfängers (8) mit einem Referenzwert verglichen wird.
